# EUROPÄISCHE PATENTANMELDUNG

(11) **EP 4 238 799 A2**
(43) Veröffentlichungstag der Anmeldung: **06.09.2023**
(21) Anmeldenummer: 22203454.8
(22) Anmeldetag: 25.10.2022
(51) Int. Cl.: B60K 15/063, B60K 15/067, B60K 15/07

(54) **ARBEITSMASCHINE**

(30) Priorität: 16.12.2021 DE 102021133515
(71) Anmelder: Liebherr-Werk Bischofshofen GmbH, 5500 Bischofshofen (AT)
(72) Erfinder: DENGG, Reinhard, 5580 Tamsweg (AT); GANITZER, Georg, 5542 Flachau (AT); SAGORZ, David, 5633 Bad Hofgastein (AT); KAINZ, Birgit, 3423 St. Andrä-Wördern (AT); KAINZ, Peter, 3423 St. Andrä-Wördern (AT)
(74) Vertreter: Herrmann, Uwe

(57) **Zusammenfassung**

Die vorliegende Erfindung betrifft eine Arbeitsmaschine mit wenigstens einem Behälter zur Aufnahme eines Kraftstoffs, der zum Vortrieb der Arbeitsmaschine und/oder zum Antrieb einer Maschinenkomponente dient, wobei eine Baugruppe vorgesehen ist, die einen Montagerahmen umfasst, in dem der Behälter aufgenommen ist, und die des Weiteren eine Panzerung zum mechanischen Schutz des in dem Montagerahmen befindlichen Behälters aufweist.

## Beschreibung

Die vorliegende Erfindung betrifft eine Arbeitsmaschine mit wenigstens einem Behälter zur Aufnahme eines Kraftstoffs, der zum Vortrieb der Arbeitsmaschine und/oder zum Antrieb einer Maschinenkomponente dient.

Bei der Anordnung von Tanksystemen für gasförmige Energieträger (wie z.B. Druckwasserstoff) eines Fahrzeug-Kraftstoffsystems ist die Unterbringung einer ausreichenden Füllmenge eine sehr große Herausforderung. Insbesondere die Unterbringung von in der Regel zylindrischen Druckwasserstoffbehältern erfordert große Anstrengungen, den vorhanden Bauraum möglichst gut ausreizen zu können, und das Verhalten in Bezug auf Fahrbarkeitskriterien und Bedienbarkeitskriterien nicht einzuschränken. Erschwerend kommt hinzu, dass für den mechanischen Schutz der Wasserstoffbehälter je nach Einbauort am Fahrzeug entsprechende konstruktive Maßnahmen vorzusehen sind, deren Notwendigkeit einerseits aus der Risikoanalyse des Fahrzeugherstellers herrührt, aber auch aus dem Analogiedenken im Zuge einer etwaigen Umsetzung von Richtlinien und Vorschriften aus dem Automotive Bereich.

Aus dem Stand der Technik ist es aus dem PKW-Bereich bekannt, Erdgas- aber auch Wasserstofftanks innerhalb der Fahrzeug-Crashstruktur unterzubringen. Beispielsweise sind die Behälter unter der Rückbank angeordnet, oder im Bereich des Unterbodens. Entsprechend vorteilhaft wirkt die Crashstruktur der Fahrzeugkarosserie als mechanischer Schutz. Im LKW-Bereich ist die Anordnung als Flaschenbündel hinter der Kabine bekannt, was vorteilhaft für die typischen Unfallszenarien sein dürfte. Weniger vorteilhaft scheint hingegen die Anordnung im LKW in der Ebene des Chassis, außerhalb des Fahrzeugrahmens, zwischen den Achsen, was jedoch aufgrund des immensen Reichweitenbedarfs alternativlos scheint. Schließlich sind aus dem Busbereich auf dem Dach platzierte Wasserstoff-Tanksysteme bekannt, die eine sehr starke Ähnlichkeit zu den Lösungen für Erdgasfahrzeuge aufweisen.

Die vorgenannten bekannten Ansätze sind für Radlader oder sonstige Arbeitsmaschinen ungeeignet. Innerhalb des geschützten hinteren Teils des durch das Knickgelenk verbundenen Fahrzeugrahmes wird jeglicher Bauraum durch Antriebstechnik wie Energiequelle, Motoren, Getriebe, Gelenkwellen und Achsen beansprucht. Eine Anordnung des oder Behälter hinter der Kabine des Radladers ist aufgrund der Unfall- und Gefahrenszenarien nur begrenzt möglich. Dies gilt entsprechend für die Anordnung auf dem Kabinendach des Radladers, zumal das Platzangebot für das Unterbringen von Wasserstofftanks auf einer Radladerkabine im Vergleich zu einem Autobus äußerst gering ist, und Durchfahrts- aber auch Transporthöhe für den Tiefladetransport massiv einschränken würde.

Der vorliegenden Erfindung liegt die Aufgabe zugrunde, eine Arbeitsmaschine der eingangs genannten Art dahingehend weiterzubilden, dass die Anforderungen an einen hohen mechanischen Schutzbedarf (FOPS-Test) auch im Falle eines Überschlags der Arbeitsmaschine erfüllt werden. Insbesondere muss sichergestellt werden, dass im Falle eines Überschlags der Kraftstoff-Behälter allen auftretenden Kräften standhält.

Diese Aufgabe wird durch eine Arbeitsmaschine mit den Merkmalen des Anspruchs 1 gelöst.

Danach ist eine Baugruppe vorgesehen, die einen Montagerahmen umfasst, in dem der oder die Behälter aufgenommen sind, und die des Weiteren eine Panzerung zum mechanischen Schutz des in dem Montagerahmen befindlichen Behälters aufweist.

Die Erfindung basiert somit auf dem Gedanken, eine Baugruppe vorzusehen, die einen Montagerahmen ("Rack") als Traggerüst zur Aufnahme der Behälter und vorzugsweise zum Ermöglichen von deren Verformung sowie eine mechanische Schutzstruktur als Panzerung als gemeinsames Bauteil aufweist. Denkbar ist es beispielsweise, dass die Panzerung in Form einer Wanne bzw. Behälter-, d.h. Tankwanne ausgebildet ist. Diese kann beispielsweise aus Blech bzw. Stahl oder auch aus einem Verbundmaterial, wie z.B. GFK oder CFK oder aus einer Kombination der vorgenannten Materialien bestehen.

Der oder die Behälter sind vorzugsweise entnehmbar bzw. austauschbar in oder an dem Montagerahmen bzw. der Baugruppe angeordnet. Beansprucht ist die Ausführung der Arbeitsmaschine mit und ohne Behälter sowie die Ausführung mit den leeren Behältern als auch mit Behältern, die mit Kraftstoff gefüllt sind.

Beispiele für denkbare gasförmige Kraftstoffe sind Wasserstoff, CNG, Methangas und andere, Beispiele für flüssige Kraftstoffe sind flüssiger Wasserstoff und Flüssiggas, e-Fuels und konventioneller Dieselkraftstoff.

Es wird darauf hingewiesen, dass der Begriff "Montagerahmen" nicht einschränkend dahingehend auszulegen ist, dass es sich dabei um eine rahmenförmige Struktur im engeren Sinne handelt. Umfasst ist jede beliebige Tragstruktur bzw. Traggerüst. Der Montagerahmen wird im Rahmen der vorliegenden Erfindung auch als "Tankwanne" bezeichnet.

Die Baugruppe vereinigt somit zwei Funktionen, nämlich die sichere Aufnahme des oder der Behälter sowie die Schutzfunktion für die Behälter. Die Lösung zeichnet sich durch einen besonders kompakten und platzsparenden Einbau mit der Möglichkeit aus, dass die Baugruppe geringen Abständen zu den benachbarten Teilen der Arbeitsmaschine aufweist.

In einem weiteren Aspekt bezieht sich die Erfindung auf eine Arbeitsmaschine mit den Merkmalen des Anspruchs 2. Danach ist vorgesehen, dass ein Montagerahmen vorgesehen ist, in dem der Behälter angeordnet ist, und dass ein Schwenk- oder Klappmechanismus vorhanden ist, mittels dessen der Montagerahmen schwenk- oder klappbar an der Arbeitsmaschine angeordnet ist.

Durch einen Schwenk- oder Klappmechanismus lässt sich die Einbaulage der Tankwanne bzw. des Montagerahmens temporär verändern, sodass die Wartungszugänglichkeit für das Wasserstoff-Tanksystem oder ein sonstiges Behältersystem, aber auch für die benachbarten Bauteile aufgrund des platzsparenden Einbaus und der Schwenkbarkeit besonders gut ermöglicht werden kann.

Denkbar ist es beispielsweise, dass die Baugruppe von der Arbeitsmaschine weg verschwenkt werden kann, beispielsweise um einen Austausch eines Behälters oder um eine Reparatur oder Wartung des Behälter- bzw. Tanksystems oder eines sonstigen Teils der Arbeitsmaschine durchführen zu können.

In einem weiteren Aspekt betrifft die Erfindung eine Arbeitsmaschine mit den Merkmalen des Anspruchs 3. Danach ist vorgesehen, dass ein Montagerahmen vorgesehen ist, in dem der oder die Behälter angeordnet sind, und dass der Montagerahmen oberhalb des oder der Radhäuser angeordnet ist.

Die Anordnung der Behälter hinter der Kabine der Arbeitsmaschine ist aufgrund der Unfall- und Gefahrenszenarien nur begrenzt möglich. Wie oben ausgeführt, ist auch die Anordnung auf dem Dach der Kabine der Arbeitsmaschine mit Nachteilen verbunden. Die Anordnung über einem oder mehreren Radhäusern (ein- oder beidseitig) ist besonders vorteilhaft, da zum einen eine gute Zugänglichkeit zu dem oder den Behältern gewährleistet ist und die mit der Anordnung auf dem Kabinendach verbundenen Nachteile (Probleme bzgl. der Durchfahrtshöhe, der Transporthöhe für den Tiefladetransport, keine hinreichende Stabilität im Falle des Überschlages etc.) vermieden werden.

Die Anordnung vorzugsweise unmittelbar oder mit Abstand über dem oder den Radhäusern ist auch dahingehend vorteilhaft, als dass die Sicht des in der Kabine befindlichen Maschinenführers nicht oder nicht erheblich eingeschränkt wird.

Beispielsweise bieten sich die hinteren Radhäuser des Radladers oder einer sonstigen Arbeitsmaschine und in Verlängerung die Ballastgewichte als Anbau-oder Einbauort an und darüber angeordnet die Behälterinstallation als Tankwanne oder dergleichen auszubilden. Je nach Fahrzeuggröße kann die Tankwanne bzw. die Baugruppe einseitig oder beidseitig angeordnet sein, und mit einem oder mehreren liegenden oder stehenden Behältern ausgestattet sein.

Ein möglichst knappes Anordnen dieser Baugruppe am benachbarten Maschinenraum, in dem als Energiequelle z.B. eine Brennstoffzelle, aber auch einen Wasserstoff-Hubkolbenmotor untergebracht sein kann, erlaubt ggf. das Aufrechterhalten des Sichtfeldes des Fahrers auf das Fahrzeugheck bei Schulterblick in der Rückwärtsfahrt.

Der Schwenk- und Klappmechanismus erlaubt es, die Tankwanne bzw. Baugruppe möglichst nahe am Maschinenraum anordnen zu können, ohne dass durch diese kompakte Anordnung die Wartungszugänglichkeit beeinträchtigt würde.

Die vorliegende Erfindung umfasst auch eine Arbeitsmaschine mit einer beliebigen Kombination der Merkmale eines oder mehrerer der Ansprüche 1, 2 und 3.

Vorzugsweise ist die Tankwanne bzw. die Baugruppe ausgeführt, den oder die Behälter vor Feuer zu schützen.

In einer Weiterbildung der Erfindung ist ein ortsfestes Kraftstoff-Rohrleitungssystem vorhanden und ein flexibles Schlauchstück vorgesehen, das dieses ortsfeste Rohrleitungssystem mit dem Behälter bzw. mit dem Montagerahmen verbindet. So ist ein problemloses Klappen oder Verschwenken möglich, ohne das die Verbindung zwischen den fest angeordneten Komponenten und den klappbaren bzw. schwenkbaren Teilen des Kraftstoffsystems gelöst werden müssen.

Der Übergang der Wasserstoffleitungen oder sonstiger Kraftstoffleitungen von dem oder den beweglichen Teil(en) des Tanksystems auf das fahrzeugfeste, stehende Rohrleitungssystem wird somit vorzugsweise mit einem flexiblen Schlauchstück ausgeführt.

Denkbar ist es, dass der Schwenk- oder Klappmechanismus entweder händisch bewegbar ist und/oder dass ein fremdkraftunterstützter Mechanismus vorhanden ist, um den Schwenk- oder Klappmechanismus zu betätigen. So kann der Schwenk- oder Klappmechanismus entweder durch Muskelkraft oder mit einem fremdkraftunterstützen Mechanismus betätigt werden, wie z.B. mittels. Gasdruckfedern, elektrischen Hubspindeln oder dgl., Hydraulik- und/oder Pneumatikzylindern etc..

Die Achse, um die der Schwenk- oder Klappmechanismus verschwenk- bzw. klappbar ist, kann horizontal, vertikal oder schräg verlaufen.

Der Wegklapp- und Ausschwenkmechanismus kann über entsprechende Endanschläge und/oder Verriegelungen verfügen, wobei letztere den Zweck haben, die Behälteranordnung in der gewünschten Position zu fixieren.

Wie oben ausgeführt, kann der Montagerahmen ausgebildet sein, eine mechanische Verformung des Behälters aufzunehmen.

Die Tankwanne kann als Vormontage-Baugruppe ausgeführt sein.

Sie kann sich als Baugruppe aus mehreren Einzelteilen zusammensetzten.

Auch ist es denkbar, dass der Montagerahmen und der mechanische Schutz in einem einzigen Bauteil, d.h. einteilig ausgeführt sind.

Das Kraftstoffsystem kann einen Hochdruckteil aufweisen, wobei in dem Montagerahmen bzw. in der Baugruppe vorzugsweise sämtliche Bestandteile des Hochdruckteils angeordnet sind. Die Tankwannen beinhalten vorteilhafterweise sämtliche Komponenten des Hochdruckteils inkl. dem Druckregler, sodass die flexiblen Leitungen Bestandteil der Mitteldruckstrecke der Gas- bzw. Kraftstoffstraße des Fahrzeug-Kraftstoffsystems sind.

Der Behälter kann zur Aufnahme eines gasförmigen und/oder zur Aufnahme eines flüssigen Kraftstoffs dienen bzw. mit diesem befüllt sein.

Vorzugsweise handelt es sich bei der Arbeitsmaschine um eine fahrbare Arbeitsmaschine und insbesondere um einen Radlader oder artverwandte Maschinengattungen bzw. knickgelenkte Arbeitsmaschinen, um eine Schub- und Laderaupe, um einen Ketten- und Radbagger, um einen knickgelenkten Mulden- und Starrrahmenkipper oder um einen Teleskoplader.

Die Arbeitsmaschine kann zum Vortrieb der Arbeitsmaschine eine Brennstoffzelle oder einen Verbrennungsmotor, wie einen Wasserstoff-Hubkolbenmotor aufweisen.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Weitere Einzelheiten und Vorteile der Erfindung werden anhand eines in der Zeichnung dargestellten Ausführungsbeispiels näher erläutert.

Es zeigen:
- Figur 1:: eine Draufsicht auf einen Radlader gemäß der Erfindung mit stehend angeordneten Tanks,
- Figur 2:: eine Heckansicht des Radladers gemäß Figur 1 mit eingeklappter Tankwanne,
- Figur 3:: eine Heckansicht des Radladers gemäß Figur 1 mit eingeklappter Tankwanne,
- Figur 4:: eine Draufsicht auf einen Radlader gemäß der Erfindung mit stehend angeordneten Tanks,
- Figur 5:: eine Heckansicht des Radladers gemäß Figur 4,
- Figur 6:: eine Heckansicht eines Radladers mit liegend angeordneten Tanks mit eingeklappter Tankwanne,
- Figur 7:: eine Heckansicht des Radladers gemäß Figur 6 mit ausgeklappter Tankwanne und
- Figur 8:: eine Draufsicht auf einen Radlader mit um eine vertikale Achse verschwenkbarer Tankanordnung.

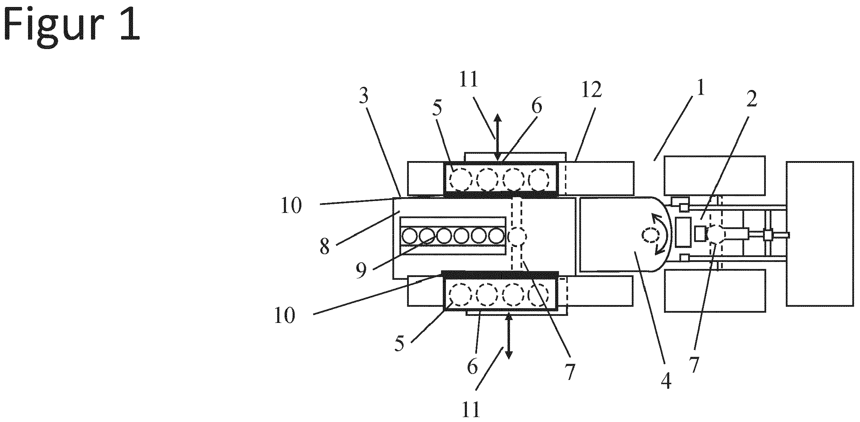

Figur 1 zeigt einen Radlader 1 gemäß der Erfindung in einer Draufsicht. Der Radlader weist einen Vorderwagen 2 und einen Hinterwagen 3 auf, die durch ein Knickgelenk relativ zueinander schwenkbar sind.

Mit dem Bezugszeichen 4 ist die Kabine des Radladers gekennzeichnet.

Das Bezugszeichen 5 kennzeichnet stehend angeordnete Kraftstoffbehälter bzw. Tanks. Die stehend nebeneinander angeordneten Tanks 5 befinden sich in einer schützenden Struktur und Montagerahmen 6. Diese Anordnung befindet sich wie aus Figur 1 ersichtlich an beiden Seiten jeweils über den hinteren Radhäusern 12 des Radladers 1. Der Begriff "über" oder "oberhalb" setzt nicht voraus, dass sich die Tankwanne oder der Montagerahmen exakt oberhalb der Radhäuser befinden, auch ein seitlicher Versatz ist von der Erfindung mit umfasst.

Mit 7 sind die hintere und vordere Antriebsachse und mit 8 der Maschinenraum gekennzeichnet. Das Bezugszeichen 9 kennzeichnet die Energiequelle, z.B. in Form einer Brennstoffzelle oder eines Verbrennungsmotors.

Das Tanksystems bzw. die Tankwanne oder Montagegruppe ist um die horizontal verlaufende Achse 10 verschwenkbar, um eine gute Zugänglichkeit sowohl zu dem Tanksystem als auch zu den im eingeklappten Bereichen hinter diesem Teilen der Arbeitsmaschine zu gewährleisten. Mit 11 ist der Schwenkbereich des Tanksystems gekennzeichnet.

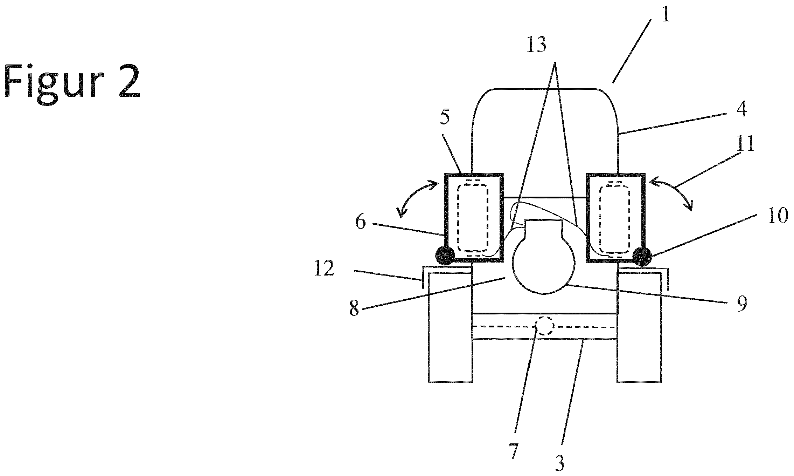

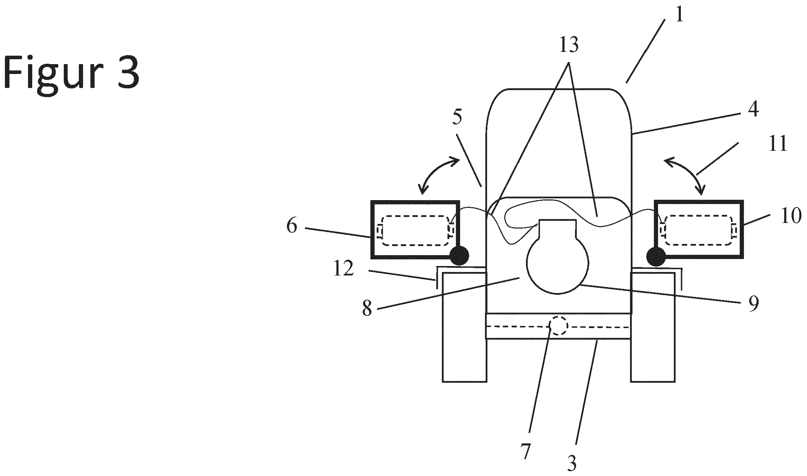

Figur 2 zeigt den Radlader gemäß Figur 1 in einer Heckansicht mit angeklappten Montagerahmen bzw. Tankwannen und Figur 3 mit abgeklappten Montagerahmen bzw. Tankwannen.

Gleiche oder funktionsgleiche Elemente sind in den Figuren mit denselben Bezugszeichen versehen, wobei das Bezugszeichen 5 sowohl die Tanks als solche als auch die Tankwanne bzw. den Montagerahmen betrifft.

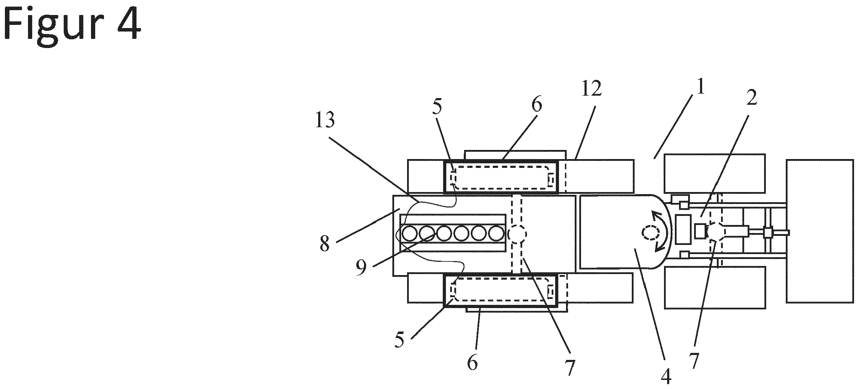

Aus Figur 4 ist eine Draufsicht auf einen Radlader gemäß der Erfindung mit liegenden Tanks 5 ersichtlich. Es können ein oder mehrere übereinander angeordnete Tanks 5 verwendet werden. Auch in dieser Version sind die Kraftstoff-Behälter, d.h. die Tanks 5 über dem Radkasten 12 angeordnet. In dieser Ausführung ist die Tankanordnung nicht verschwenkbar angeordnet.

Mit 13 ist eine Versorgungsleitung gekennzeichnet, die zur Versorgung des Verbrennungsmotors bzw. der Brennstoffzelle etc. mit Kraftstoff, z.B. mit Wasserstoff dient.

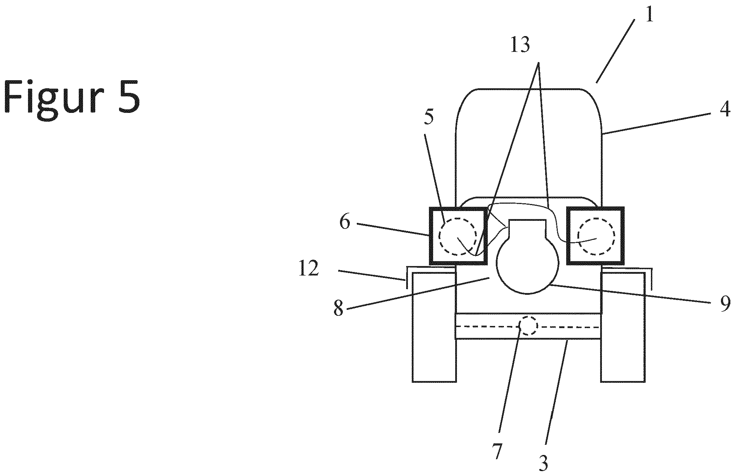

Figur 5 ist eine Heckansicht des Radladers gemäß Figur 4.

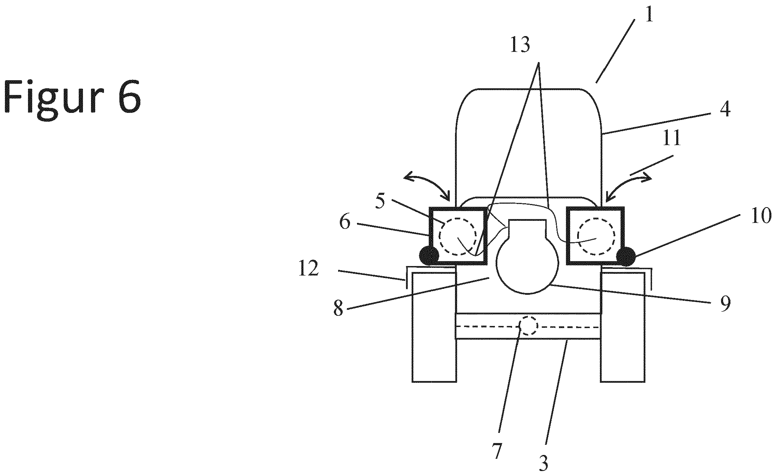

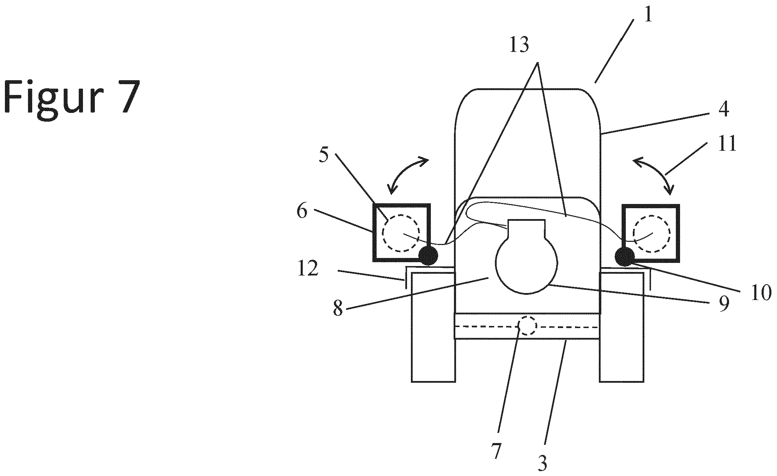

Aus Figur 6 ist Heckansicht einer Version eines Radladers 1 gezeigt, bei der die Tankwanne mit darin liegenden Tanks 5 bzw. der Montagerahmen um eine horizontal verlaufende Achse 10 verschwenkbar ist. Figur 6 zeigt die Anordnung im eingeklappten Zustand der Tankwanne 5. Figur 7 zeigt den Radlader gemäß Figur 6 mit nach außen ausgeklappter Tankwanne 5. Das Bezugszeichen 11 kennzeichnet den Schwenkbereich des Tanksystems.

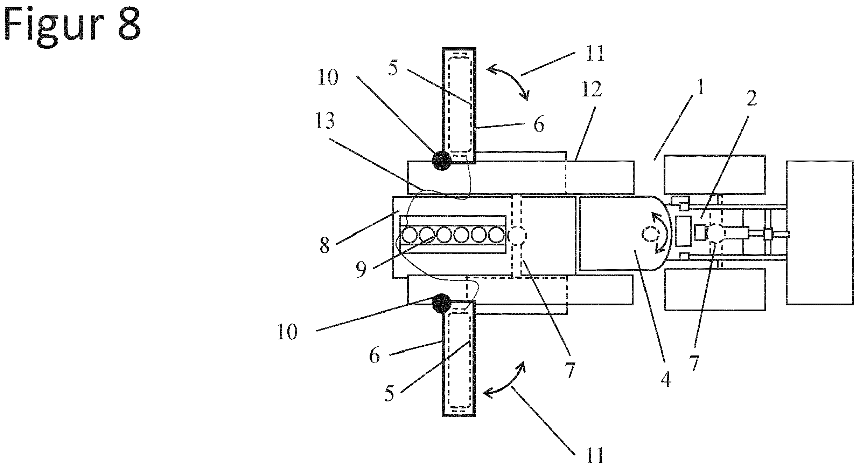

Die Ausführungsform gemäß Figur 8 zeigt eine Draufsicht auf den Radlader mit liegend angeordneten Tanks 5, wobei die Schwenk- bzw. Drehachse, um die die Tankwanne 5 verschwenkbar ist, vertikal verläuft. Mit 11 ist auch hier der Schwenkbereich des Tanksystems und mit 12 der Radkasten des Radladers gezeigt. Das Bezugszeichen 13 kennzeichnet die Wasserstoff-Versorgungsleitung oder eine sonstige Kraftstoffversorgungsleitung.

## Patentansprüche

1. Arbeitsmaschine mit wenigstens einem Behälter zur Aufnahme eines Kraftstoffs, der zum Vortrieb der Arbeitsmaschine und/oder zum Antrieb einer Maschinenkomponente dient, **dadurch gekennzeichnet, dass** eine Baugruppe vorgesehen ist, die einen Montagerahmen umfasst, in dem der Behälter aufgenommen ist, und die des Weiteren eine Panzerung zum mechanischen Schutz des in dem Montagerahmen befindlichen Behälters aufweist.

2. Arbeitsmaschine mit wenigstens einem Behälter zur Aufnahme eines Kraftstoffes, der zum Vortrieb der Arbeitsmaschine und/oder zum Antrieb einer Maschinenkomponente dient, **dadurch gekennzeichnet, dass** ein Montagerahmen vorgesehen ist, in dem der Behälter angeordnet ist, und dass ein Schwenk- oder Klappmechanismus vorhanden ist, mittels dessen der Montagerahmen schwenk- oder klappbar an der Arbeitsmaschine angeordnet ist.

3. Arbeitsmaschine mit wenigstens einem Behälter zur Aufnahme eines Kraftstoffes, der zum Vortrieb der Arbeitsmaschine und/oder zum Antrieb einer Maschinenkomponente dient, wobei die Arbeitsmaschine über ein oder mehrere Radhäuser verfügt, **dadurch gekennzeichnet, dass** ein Montagerahmen vorgesehen ist, in dem der Behälter angeordnet ist, und dass der Montagerahmen oberhalb des oder der Radhäuser der Arbeitsmaschine angeordnet ist.

4. Arbeitsmaschine nach Anspruch 1, **dadurch gekennzeichnet, dass** die Arbeitsmaschine mit den Merkmalen von Anspruch 2 und/oder von Anspruch 3 ausgebildet ist.

5. Arbeitsmaschine nach Anspruch 2, **dadurch gekennzeichnet, dass** das die Arbeitsmaschine mit den Merkmalen von Anspruch 3 ausgebildet ist.

6. Arbeitsmaschine nach einem der vorhergehenden Ansprüche, **dadurch gekennzeichnet, dass** ein ortsfestes Kraftstoff-Rohrleitungssystem vorhanden ist und dass ein flexibles Schlauchstück vorgesehen ist, das dieses ortsfeste Rohrleitungssystem mit dem Behälter bzw. mit dem Montagerahmen verbindet.

7. Arbeitsmaschine nach einem der Ansprüche 2 oder 4 bis 6, **dadurch gekennzeichnet, dass** der Schwenk- oder Klappmechanismus entweder händisch bewegbar ist und/oder dass ein fremdkraftunterstützter Mechanismus vorhanden ist, um den Schwenk- oder Klappmechanismus zu betätigen.

8. Arbeitsmaschine nach einem der Ansprüche 2 oder 4 bis 7, **dadurch gekennzeichnet, dass** die Achse des Schwenk- oder Klappmechanismus horizontal, vertikal oder schräg verläuft.

9. Arbeitsmaschine nach einem der vorhergehenden Ansprüche, **dadurch gekennzeichnet, dass** der Montagerahmen ausgebildet ist, eine mechanische Verformung des Behälters aufzunehmen.

10. Arbeitsmaschine nach einem der Ansprüche 1 oder 4 bis 9, **dadurch gekennzeichnet, dass** die Baugruppe als Vormontage-Baugruppe ausgebildet ist und/oder dass die Baugruppe einteilig oder aus mehreren Elementen bestehend ausgebildet ist.

11. Arbeitsmaschine nach einem der vorhergehenden Ansprüche, **dadurch gekennzeichnet, dass** das Kraftstoffsystem einen Hochdruckteil aufweist und dass in dem Montagerahmen bzw. in der Baugruppe sämtliche Bestandteile des Hochdruckteils angeordnet sind.

12. Arbeitsmaschine nach einem der vorhergehenden Ansprüche, **dadurch gekennzeichnet, dass** der Behälter zur Aufnahme eines gasförmigen und/oder zur Aufnahme eines flüssigen Kraftstoffs dient bzw. diesem befüllt ist.

13. Arbeitsmaschine nach einem der vorhergehenden Ansprüche, **dadurch gekennzeichnet, dass** es sich bei der Arbeitsmaschine um eine fahrbare Arbeitsmaschine und insbesondere um einen Radlader, um eine Schub- und Laderaupe, um einen Ketten- und Radbagger, um einen knickgelenkten Mulden- und Starrrahmenkipper oder um einen Teleskoplader handelt.

14. Arbeitsmaschine nach einem der vorhergehenden Ansprüche, **dadurch gekennzeichnet, dass** die Arbeitsmaschine insbesondere zum Vortrieb der Arbeitsmaschine oder zur Versorgung von Verbrauchern der Arbeitsmaschine eine Brennstoffzelle oder einen Verbrennungsmotor, wie einen Wasserstoff-Hubkolbenmotor aufweist.
